# EUROPÄISCHE PATENTSCHRIFT

(11) **EP 3 218 383 B1**
(45) Veröffentlichungstag und Bekanntmachung des Hinweises auf die Patenterteilung: **06.03.2019**
(21) Anmeldenummer: 16790346.7
(22) Anmeldetag: 02.11.2016
(51) Int. Cl.: C07F 7/12

(54) **VERFAHREN ZUR HERSTELLUNG VON CYANOALKYLFLUORSILANEN**
METHOD FOR PRODUCING CYANOALKYL FLUOROSILANES
PROCÉDÉ DE PRÉPARATION DE CYANOALKYLFLUOROSILANES

(30) Priorität: 09.11.2015 DE 102015222019
(43) Veröffentlichungstag der Anmeldung: 20.09.2017
(73) Patentinhaber: Wacker Chemie AG, 81737 München (DE)
(72) Erfinder: DEUBEL, Frank, 85435 Erding (DE)
(74) Vertreter: Fritz, Helmut
(86) Internationale Anmeldenummer: PCT/EP2016/076367
(87) Internationale Veröffentlichungsnummer: WO 2017/080878

(56) Entgegenhaltungen:
- EP-B1- 0 599 278
- US-A1- 2014 356 735
- ARTHUR E. NEWKIRK: "Preparation of the Methylfluorosilanes", JOURNAL OF THE AMERICAN CHEMICAL SOCIETY, Bd. 68, Nr. 12, 1. Dezember 1946 (1946-12-01), Seiten 2736-2737, XP55332159, US ISSN: 0002-7863, DOI: 10.1021/ja01216a518 in der Anmeldung erwähnt

## Beschreibung

Die Erfindung betrifft ein Verfahren zur Herstellung von Cyanoalkylfluorsilanen durch Umsetzung von Cyanoalkylchlorsilanen mit Metallfluorid.

Die Entwicklung leistungsfähigerer Lithium-Ionen-Zellen erfordert auch immer neue Elektrolytmaterialien, um den sich ergebenden neuen Anforderungen gerecht zu werden. Häufig werden dem Basiselektrolyt z.B. zum Schutz vor Überladung, für eine stabilere SEI oder auch zur thermischen Stabilisierung des Elektrolyten neue Komponenten zugesetzt. Für thermisch besonders stabile Elektrolyte werden z.B. organische Cyanide eingesetzt, wie z.B. in "Surface Complex Formation between Aliphatic Nitrile Molecules and Transition Metal Atoms for Thermally Stable Lithium-Ion Batteries" (Young-Soo Kim, Hochun Lee and Hyun-Kon Song; ACS Appl. Mater. Interfaces, 2014, 6 (11), pp 8913-8920) beschrieben. Auch die Lösungen von LiPF₆ als Leitsalz in Cyanogruppen-haltigen Fluorsilanen werden in der WO2014/0356735 A1 als thermisch besonders stabil beschrieben. Dadurch kann die bei thermischer Belastung von Lithium-Ionen-Zellen häufig beobachtete Gasentwicklung durch Zersetzung des Elektrolyten deutlich reduziert werden.

In der US 2014/0356735 A1 ist die Herstellung von 3-Cyanopropyldimethylfluorsilan durch Umsetzung von 3-Cyanopropyldimethylchlorsilan mit Ammoniumbifluorid beschrieben.

Aufgrund seiner Korrosivität ist Ammoniumbifluorid jedoch nicht für den Einsatz in Metallbehältern oder Glasgeräten geeignet. Zudem entsteht während der Reaktion stöchiometrisch gasförmiger Chlorwasserstoff. Die entstehenden Ammoniumsalze bereiten außerdem Probleme bei einer nachfolgenden Aufarbeitung.

Eine alternative Fluorierung mit KF bzw. NaF ist langsam und benötigt den Einsatz von Lösemitteln, die aufwändig vom Reaktionsprodukt abgetrennt werden müssen.

Die aus der US 2014/0356735 A1 bekannte Herstellung von Cyanoalkyl-funktionellen Fluorsilanen wie z.B. dem 3-Cyanopropyldimethylfluorsilan durch Fluorierung von 3-Cyanopropyldimethylchlorsilan mittels Ammoniumbifluorid ist also großtechnisch schlecht umsetzbar.

Zinkfluorid als Fluorierungsmittel für den Halogenaustausch an Hydridochlorsilanen in Anwesenheit von Lösemitteln ist aus der EP 0599278 B1 grundsätzlich bekannt, allerdings werden maximal Umsätze unterhalb von 90% erreicht. Die lösemittelfreie Herstellung von Organofluorsilanen mit ZnF₂ führt nur zu Ausbeuten <50% (A.E. Newkirk, J. Am. Chem. Soc., 1946, 68 (12), pp 2736-2737) .

Aufgabe der vorliegenden Erfindung war, ein Verfahren zur Herstellung von Cyanoalkylfluorsilanen zur Verfügung zu stellen, das korrosive Nebenprodukte vermeidet und in der großtechnischen Umsetzung zu hohen Ausbeuten mit hoher Reinheit führt.

Gegenstand der Erfindung ist somit ein Verfahren zur Herstellung von Cyanoalkylfluorsilanen der allgemeinen Formel I

N≡C-(CH₂)ₙ-SiF₃₋ₓRₓ (I),

bei dem Cyanoalkylchlorsilane der allgemeinen Formel II

N≡C-(CH₂)ₙ-SiCl₃₋ₓRₓ (II),

mit Metallfluorid umgesetzt werden, bei dem das Metall ausgewählt wird aus der 1. Hauptgruppe und den leichtesten Metallen der Nebengruppen 8, 1B und 2B des Periodensystems der Elemente,
- **R**: einen Alkylrest,
- **n**: ganzzahlige Werte von 1 bis 10 und
- **x**: die Werte 0, 1 oder 2 bedeuten.

Im erfindungsgemäßen Verfahren konnte überraschenderweise eine Fluorierung mit oder ohne Lösemittel gefunden werden, die schnell, quantitativ und ohne problematische Nebenprodukte, insbesondere ohne Entstehung von korrosiver HCl abläuft. Ferner wird die Aufarbeitung des Reaktionsgemisches durch Vermeidung von Ammoniumsalzen erheblich erleichtert.

Alkylreste R sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste.

Bevorzugte Reste **R** sind lineare Alkylreste mit 1 bis 6 Kohlenstoffatomen. Insbesondere bevorzugt ist der Methyl-, Ethyl-, n-Propyl- und isoPropylrest.

Vorzugsweise bedeutet n ganzzahlige Werte von 1 bis 6 und insbesondere die Werte 3 und 4.

Vorzugsweise bedeutet **x** den Wert 2.

Insbesondere wird 3-Cyanopropyldimethylchlorsilan eingesetzt und 3-Cyanopropyldimethylfluorsilan hergestellt.

Es kann im Verfahren ein Metallfluorid eines einzigen Metalls, ein Mischfluorid mehrerer Metalle, oder ein Gemisch mehrerer Metallfluoride, die ausgewählt werden aus Metallfluoriden eines einzigen Metalls und Mischfluoriden mehrerer Metalle eingesetzt werden.

Bevorzugt sind die Fluoride der Metalle Li, Na, K, Rb, Cs, Fe, Co, Ni, Cu und Zn. Besonders bevorzugt sind ZnF₂ und das Mischfluorid von Zn und K.
ZnF₂ und KZnF₃ sind besonders bevorzugt, da sie besonders reaktiv, nicht hygroskopisch und toxikologisch weniger bedenklich sind.

Vorzugsweise werden pro Mol Chlor im Cyanoalkylchlorsilan 1,00 Mol bis 2 Mol Fluorid, besonders bevorzugt 1,05 Mol bis 1,5 Mol Fluorid, insbesondere 1,1 Mol bis 1,3 Mol Fluorid eingesetzt.

Die Umsetzung kann in Masse, d.h. ohne Lösungsmittel durchgeführt werden. Dabei wird vorzugsweise das Cyanoalkylchlorsilan vorgelegt und das Metallfluorid zugegeben.

Die Umsetzung kann auch in Lösung durchgeführt werden. Dabei wird vorzugsweise das Metallfluorid in Lösungsmittel vorgelegt und das Cyanoalkylchlorsilan in Reinform oder als Lösung zugegeben.

Lösungsmittel können vorzugsweise in Mengen von mindestens 1% und höchstens 200%, besonders bevorzugt mindestens 10% und höchstens 100% bezogen auf das Reaktionsgemisch eingesetzt werden. Beispiele für Lösungsmittel sind aprotische Lösungsmittel, vorzugsweise lineare oder cyclische, gesättigte oder ungesättigte Kohlenwasserstoffe, z.B. Pentan, Cyclohexan, Toluol, Ether wie Methyl-tert-butylether, Anisol, Tetrahydrofuran oder Dioxan, Halogenkohlenwasserstoffe, wie Dichlormethan, 1,2-Dichlorethan oder Chlorbenzol, Nitrile wie Acetonitril oder Propionitril, oder DMSO.

Die Umsetzung wird bevorzugt bei Temperaturen von 0 bis 180°C, besonders bevorzugt von 20 bis 150°C und Drücken bevorzugt von 100 mbar bis 10 bar, besonders bevorzugt von 800 mbar bis 2 bar durchgeführt.
Die Reaktionszeiten betragen bevorzugt 1 min bis 8 Stunden, besonders bevorzugt 10 min bis 4 Stunden.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Reaktionsmischung ergeben 100 Gew.-%.

In den folgenden Beispielen sind, falls jeweils nicht anders angegeben, alle Mengen- und Prozentangaben auf das Gewicht bezogen und alle Drücke 0,10 MPa (abs.).
Sofern nicht anders angegeben, wurden die nachstehenden Beispiele bei Raumtemperatur, also bei 23°C durchgeführt. Die für die Synthesen verwendeten Lösungsmittel wurden nach Standardverfahren getrocknet und unter einer trockenen ArgonAtmosphäre aufbewahrt.

Folgende Materialien wurden aus kommerziellen Quellen bezogen und ohne weitere Reinigung direkt eingesetzt: Zinkfluorid wasserfrei (Sigma-Aldrich), Kaliumfluorid (Sigma-Aldrich), Acetonitril wasserfrei (Sigma-Aldrich), Zinkchlorid (Sigma-Aldrich)

### Beispiel 1: Fluorierung mit Zinkfluorid in Acetonitril

5,0 g 3-Cyanopropyldimethylchlorsilan
1,6 g Zinkfluorid, trocken
10 ml Acetonitril, trocken

Durchführung: Unter Stickstoff werden in einem 50ml-Zweihalskolben das Acetonitril und das Zinkfluorid vorgelegt.
Es wird auf 75°C erwärmt und unter Rühren das 3-Cyanopropyldimethylchlorsilan zugetropft.
Danach wird 4 h bei 75°C gerührt.

Es erfolgt vollständiger Umsatz des Chlorsilans zum gewünschten 3-Cyanopropyldimethylfluorsilan.

### Beispiel 2: Fluorierung mit Zinkfluorid in Masse

165 g 3-Cyanopropyldimethylchlorsilan
68 g Zinkfluorid wasserfrei
Apparatur: 1000m1-Dreihalskolben mit Schlangenkühler, Thermometer
Durchführung:3-Cyanopropyldimethylchlorsilan wird vorgelegt und das Zinkfluorid portionsweise unter Rühren zugegeben. Die Reaktionsmasse erwärmt sich auf 104°C, danach wird für eine Stunde bei 70°C gerührt.

Es erfolgt vollständige Fluorierung des 3-Cyanopropyldimethylchlorsilans zum 3-Cyanopropyldimethylfluorsilan.

### Beispiel 3: Herstellung von Kaliumzinkfluorid

10 g Zinkchlorid (73 mmol)
12,8 g Kaliumfluorid
50 ml Wasser
Apparatur: 100m1-Dreihalskolben mit Thermometer, Rückflusskühler und 25ml-Tropftrichter
Das Kaliumfluorid wird zusammen mit 40 ml Wasser im Kolben vorgelegt und auf 50°C erhitzt. Das Zinkchlorid wird zusammen mit 10 ml Wasser im Becherglas gelöst und die so erhaltene Zinkchloridlösung aus dem Tropftrichter bei 50°C langsam zugetropft, wobei das Produkt als weißer Niederschlag ausfällt. Nach vollständiger Zugabe wird bei Raumtemperatur noch 5 Stunden weitergerührt.
Niederschlag wird abgenutscht, bei 100°C und Vollvakuum vorgetrocknet, bei 180°C und Vollvakuum über Nacht getrocknet und anschließend als Fluorierungsmittel eingesetzt.

Auswaage: 11,3 g (95% d.Theorie)
24,6% K; 38% Zn; 36% F; 0,9% Cl; 0,1% H; 1,32% O

### Beispiel 4: Fluorierung mit Kaliumzinkfluorid in Masse

4 g 3-Cyanopropyldimethylchlorsilan
1,33 g Zinkfluorid wasserfrei
Apparatur: 25ml-Zweihalskolben mit Rückflusskühler
Durchführung: Das 3-Cyanopropyldimethylchlorsilan wird im Kolben auf 80°C erhitzt. KZnF₃ wird unter Rühren portionsweise zugegeben. Nach beendeter Zugabe wird der Ansatz noch 2h bei 80°C nachgerührt.

Umsatz: 94% bezogen auf das eingesetzte Chlorsilan.

## Patentansprüche

1. Verfahren zur Herstellung von Cyanoalkylfluorsilanen der allgemeinen Formel I
N≡C-(CH₂)ₙ-SiF₃₋ₓRₓ (I),
bei dem Cyanoalkylchlorsilane der allgemeinen Formel II
N≡C-(CH₂)ₙ-SiCl₃₋ₓRₓ (II),
mit Metallfluorid umgesetzt werden, bei dem das Metall ausgewählt wird aus der 1. Hauptgruppe und den leichtesten Metallen der Nebengruppen 8, 1B und 2B des Periodensystems der Elemente,
**R** einen Alkylrest, der ausgewählt wird aus Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylrest, Heptylrest, Octylrest, Nonylrest, Decylrest, Dodecylrest, Octadecylrest und Cycloalkylrest,
**n** ganzzahlige Werte von 1 bis 10 und
**x** die Werte 0, 1 oder 2 bedeuten.

2. Verfahren nach Anspruch 1, bei dem **R** Alkylreste mit 1 bis 6 Kohlenstoffatomen bedeutet.

3. Verfahren nach einem oder mehreren der vorangehenden Ansprüche, bei dem n den Wert 3, 4 oder 5 bedeutet.

4. Verfahren nach einem oder mehreren der vorangehenden Ansprüche, bei dem **x** den Wert 2 bedeutet.

5. Verfahren nach einem oder mehreren der vorangehenden Ansprüche, bei dem 3-Cyanopropyldimethylchlorsilan eingesetzt und 3-Cyanopropyldimethylfluorsilan hergestellt wird.

6. Verfahren nach einem oder mehreren der vorangehenden Ansprüche, bei dem das Metallfluorid ausgewählt wird aus ZnF₂ und dem Mischfluorid von Zn und K.

7. Verfahren nach einem oder mehreren der vorangehenden Ansprüche, bei dem pro Mol Chlor im Cyanoalkylchlorsilan 1,00 Mol bis 2 Mol Fluorid eingesetzt werden.

8. Verfahren nach einem oder mehreren der vorangehenden Ansprüche, wobei die Umsetzung in Masse durchgeführt wird.

## Claims

1. Process for preparing cyanoalkylfluorosilanes of the general formula I
N≡C-(CH₂)ₙ-SiF₃₋ₓRₓ (I),
wherein cyanoalkylchlorosilanes of the general formula II
N≡C-(CH₂)ₙ-SiCl₃₋ₓRₓ (II),
are reacted with metal fluoride, wherein the metal is selected from main group 1 and from the lightest metals of transition groups 8, 1B, and 2B of the periodic table of the elements,
**R** denotes an alkyl radical, methyl, ethyl, n-propyl, isopropyl, 1-n-butyl, 2-n-butyl, isobutyl, tert-butyl, n-pentyl, isopentyl, neopentyl, tert-pentyl radical; hexyl radicals, heptyl radicals, octyl radicals, nonyl radicals, decyl radicals, dodecyl radicals, octadecyl radicals and cycloalkyl radicals,
**n** denotes integral values from 1 to 10, and
**x** denotes the values 0, 1 or 2.

2. Process according to Claim 1, wherein **R** denotes alkyl radicals having 1 to 6 carbon atoms.

3. Process according to one or more of the preceding claims, wherein n denotes the value 3, 4 or 5.

4. Process according to one or more of the preceding claims, wherein **x** denotes the value 2.

5. Process according to one or more of the preceding claims, wherein 3-cyanopropyldimethylchlorosilane is used and 3-cyanopropyldimethylfluorosilane is prepared.

6. Process according to one or more of the preceding claims, wherein the metal fluoride is selected from ZnF₂ and from the mixed fluoride of Zn and K.

7. Process according to one or more of the preceding claims, wherein 1.00 mol to 2 mol of fluoride are used per mole of chlorine in the cyanoalkylchlorosilane.

8. Process according to one or more of the preceding claims, the reaction being carried out in bulk.

## Revendications

1. Procédé de fabrication de cyanoalkylfluorosilanes de formule générale I :
N≡C-(CH₂)ₙ-SiF₃₋ₓRₓ (I)
selon lequel des cyanoalkylchlorosilanes de formule générale II
N≡C-(CH₂)ₙ-SiCl₃₋ₓRₓ (II)
sont mis en réaction avec un fluorure métallique, le métal étant choisi dans le groupe principal 1 et les métaux les plus légers des groupes de transition 8, 1B et 2B du tableau périodique des éléments,
**R** signifiant un radical alkyle, qui est choisi parmi un radical méthyle, éthyle, n-propyle, iso-propyle, 1-n-butyle, 2-n-butyle, iso-butyle, tert.-butyle, n-pentyle, iso-pentyle, néo-pentyle, tert.-pentyle, hexyle, heptyle, octyle, nonyle, décyle, dodécyle, octadécyle et cycloalkyle,
**n** signifiant des valeurs de nombres entiers de 1 à 10 et
**x** signifiant les valeurs 0, 1 ou 2.

2. Procédé selon la revendication 1, selon lequel **R** signifie des radicaux alkyle de 1 à 6 atomes de carbone.

3. Procédé selon une ou plusieurs des revendications précédentes, selon lequel n signifie la valeur 3, 4 ou 5.

4. Procédé selon une ou plusieurs des revendications précédentes, selon lequel **x** signifie la valeur 2.

5. Procédé selon une ou plusieurs des revendications précédentes, selon lequel du 3-cyanopropyldiméthylchlorosilane est utilisé et du 3-cyanopropyldiméthylfluorosilane est fabriqué.

6. Procédé selon une ou plusieurs des revendications précédentes, selon lequel le fluorure métallique est choisi parmi ZnF₂ et le fluorure mixte de Zn et K.

7. Procédé selon une ou plusieurs des revendications précédentes, selon lequel 1,00 mole à 2 moles de fluorure sont utilisées par mole de chlore dans le cyanoalkylchlorosilane.

8. Procédé selon une ou plusieurs des revendications précédentes, selon lequel la réaction est réalisée en masse.
